(19) **Europäisches Patentamt European Patent Office Office européen des brevets**

(11) **EP 4 742 653 A1**

(12) **EUROPEAN PATENT APPLICATION**
published in accordance with Art. 153(4) EPC

(43) Date of publication:
**13.05.2026 Bulletin 2026/20**

(21) Application number: **24917312.1**

(22) Date of filing: **05.12.2024**

(51) International Patent Classification (IPC):
*H04N 13/344* (2018.01)   *H04N 13/383* (2018.01)
*H04N 13/371* (2018.01)   *H04N 13/128* (2018.01)
*H04N 13/111* (2018.01)   *H04N 13/178* (2018.01)
*G06F 1/16* (2006.01)   *G06F 3/01* (2006.01)
*G02B 27/01* (2006.01)   *G06T 7/50* (2017.01)

(52) Cooperative Patent Classification (CPC):
**G02B 27/01; G06F 1/16; G06F 3/01; G06T 7/50;
H04N 13/111; H04N 13/128; H04N 13/178;
H04N 13/344; H04N 13/371; H04N 13/383**

(86) International application number:
**PCT/KR2024/019881**

(87) International publication number:
**WO 2025/150716 (17.07.2025 Gazette 2025/29)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **08.01.2024 KR 20240003061
18.04.2024 KR 20240052024**

(71) Applicant: **Samsung Electronics Co., Ltd.
Suwon-si, Gyeonggi-do 16677 (KR)**

(72) Inventors:
• **YOON, Daewon
Suwon-si Gyeonggi-do 16677 (KR)**
• **CHO, Seungki
Suwon-si Gyeonggi-do 16677 (KR)**

(74) Representative: **Walaski, Jan Filip et al
Venner Shipley LLP
200 Aldersgate
London EC1A 4HD (GB)**

(54) **ELECTRONIC DEVICE AND CONTROL METHOD THEREFOR**

(57) Disclosed is an electronic apparatus including: a display; at least one camera; a memory storing instructions; and at least one processor, comprising processing circuitry, wherein at least one processor is configured to execute the instructions, and to cause the electronic apparatus to: display a three-dimensional (3D) image including an object positioned in a 3D virtual space through the display, identify movement information corresponding to at least one of a user head or eyes in a 3D space where a user is positioned based on a captured image acquired by the camera, identify position movement information corresponding to the 3D virtual space based on the movement information, and control the display to display the object by changing the display position and depth of the object within the 3D virtual space included in the 3D image based on the position movement information.

FIG. 4

START

DISPLAY 3D IMAGE INCLUDING OBJECT POSITIONED IN 3D VIRTUAL SPACE —S410

IDENTIFY MOVEMENT INFORMATION CORRESPONDING TO AT LEAST ONE OF USER HEAD OR EYES IN 3D SPACE WHERE USER IS POSITIONED BASED ON CAPTURED IMAGE —S420

IDENTIFY POSITION MOVEMENT INFORMATION CORRESPONDING TO 3D VIRTUAL SPACE BASED ON MOVEMENT INFORMATION —S430

DISPLAY OBJECT BY CHANGING DISPLAY POSITION AND DEPTH OF OBJECT WITHIN 3D VIRTUAL SPACE INCLUDED IN 3D IMAGE BASED ON POSITION MOVEMENT INFORMATION —S440

END

EP 4 742 653 A1

## Description

[Technical Field

The present disclosure relates to an electronic apparatus and a control method thereof, and for example, to an electronic apparatus that provides a three-dimensional (3D) image, and a control method thereof.

[Background Art]

Various types of electronic devices have been developed and supplied in accordance with the development of electronic technology. For example, display devices used in various places such as homes, offices, public places have been continuously developed over the recent years.

Stereoscopy refers to three-dimensional (3D) technology. A 3D display, which is currently being commercialized, is mainly implemented using a binocular parallax method. The binocular parallax method may provide a three-dimensional effect on a single screen such as a television (TV) or theater screen. The binocular parallax method may be classified into a glasses method (stereoscopy) that uses an auxiliary device such as glasses and a glasses-free method (autostereocopy).

Continuous research has been recently conducted on the commercialization of a glasses-free light field display and a glasses-free 3D display using eye-tracking.

[Disclosure]

[Technical Solution]

According to example embodiments of the present disclosure, provided is an electronic apparatus including: a display; at least one camera; a memory storing instructions; and at least one processor, comprising processing circuitry, wherein at least one processor, individually and/or collectively, is configured to execute the instructions, and to cause the electronic apparatus to: display a three-dimensional (3D) image including an object positioned in a 3D virtual space through the display, identify movement information corresponding to at least one of a user head or eyes in a 3D space where a user is positioned based on a captured image acquired by the camera, identify position movement information corresponding to the 3D virtual space based on the movement information, and control the display to display the object by changing the display position and depth of the object within the 3D virtual space included in the 3D image based on the position movement information.

At least one processor, individually and/or collectively, may be configured to cause the electronic apparatus to: identify first movement distance information and first movement direction information corresponding to the position movement information, and control the display to display the object by changing the display position and depth of the object in the 3D virtual space based on the first movement distance information and the first movement direction information.

At least one processor, individually and/or collectively, may be configured to cause the electronic apparatus to: identify second movement distance information corresponding to a difference between a first position and a second position and second movement direction information from the first position to the second position based on a position of the at least one of the user head or eyes in the captured image acquired by the camera being changed from the first position to the second position, and identify the first movement distance information and the first movement direction information based on the second movement distance information and the second movement direction information.

At least one processor, individually and/or collectively, may be configured to cause the electronic apparatus to: identify the first movement distance information and the first movement direction information by scaling the second movement distance information and the second movement direction information to correspond to the 3D virtual space.

At least one processor, individually and/or collectively, may be configured to cause the electronic apparatus to: identify the second movement distance information based on three-axis coordinate values corresponding to the first position and three-axis coordinate values corresponding to the second position, and identify the second movement direction information based on three-axis angular velocity values from the first position to the second position.

At least one processor, individually and/or collectively, may be configured to cause the electronic apparatus to: acquire a vector value based on the three-axis coordinate values and the three-axis angular velocity values, and identify the second movement distance information and the second movement direction information corresponding to a relative movement of the at least one of the user head or eyes based on the acquired vector value.

Three-axis coordinate values corresponding to a first position and three-axis coordinate values corresponding to a second position may each include x, y, and z coordinates in an XYZ space, and three-axis angular velocity values may include roll, pitch, and yaw values.

The 3D image may include the plurality of objects positioned in the 3D virtual space, and at least one processor, individually and/or collectively, may be configured to cause the electronic apparatus to: identify a moving target object among the plurality of objects based on a current position of the at least one of the user head or eyes, or identify the moving target object among the plurality of objects based on a user selection command.

The camera may include the plurality of cameras spaced apart from each other by a predetermined distance, and at least one processor, individually and/or collectively, may be configured to cause the electronic apparatus to: identify disparity information based on first and second captured images acquired by the plurality of cameras, and identify the movement information corresponding to the at least one of the user head or eyes in the 3D space where the user is positioned based on the disparity information.

The display may be implemented as a light field display (LFD).

According to example embodiments of the present disclosure, provided is a method of controlling an electronic apparatus, the method including: displaying a three-dimensional (3D) image including an object positioned in a 3D virtual space; identifying movement information corresponding to at least one of a user head or eyes in a 3D space where a user is positioned based on a captured image acquired by a camera; identifying position movement information corresponding to the 3D virtual space based on the movement information; and displaying the object by changing the display position and depth of the object within the 3D virtual space included in the 3D image based on the position movement information.

According to example embodiments of the present disclosure, provided is a non-transitory computer-readable medium which stores a computer instruction for causing an electronic apparatus to perform an operation when executed by at least one processor, comprising processing circuitry, individually and/or collectively, of the electronic apparatus, wherein the operation includes: displaying a three-dimensional (3D) image including an object positioned in a 3D virtual space, identifying movement information corresponding to at least one of a user head or eyes in a 3D space where a user is positioned based on a captured image acquired by a camera, identifying position movement information corresponding to the 3D virtual space based on the movement information, and displaying the object by changing the display position and depth of the object within the 3D virtual space included in the 3D image based on the position movement information.

[Description of Drawings]

The above and other aspects, features, and advantages of certain embodiments of the present disclosure will be more apparent from the following detailed description taken in conjunction with the accompanying drawings, in which:

FIG. 1 is a diagram illustrating an example operation of an electronic apparatus according to various embodiments;
FIG. 2A is a block diagram illustrating an example configuration of the electronic apparatus according to various embodiments;
FIG. 2B is a block diagram illustrating an example configuration of the electronic apparatus according to various embodiments;
FIG. 3 is a diagram illustrating an example structure and operation of a display according to various embodiments;
FIG. 4 is a flowchart illustrating an example method of controlling an electronic apparatus according to various embodiments;
FIG. 5 is a diagram illustrating an example of a three-dimensional (3D) image according to various embodiments;
FIG. 6 is a diagram illustrating an example method for tracking a user position according to various embodiments;
FIG. 7 is a flowchart illustrating an example method of controlling an electronic apparatus according to various embodiments;
FIG. 8 is a diagram illustrating an example method for mapping user movement information and movement information in a 3D virtual space according to various embodiments;
FIG. 9 is a diagram illustrating an example method of controlling a 3D virtual space according to various embodiments; and
FIG. 10 is a diagram illustrating an example method of controlling a 3D virtual space according to various embodiments.

[Best Mode]

Terms used in the disclosure are briefly described, and the present disclosure is then described in greater detail with reference to the drawings.

General terms that are currently widely used are selected as terms used in embodiments of the present disclosure in consideration of their functions in the present disclosure, and may be changed based on the intentions of those skilled in the art, cases in the art, the emergence of a new technique, or the like. In addition, in a specific case, terms may be arbitrarily chosen. In this case, the meanings of such terms are explained in detail in corresponding description portions of the present disclosure. Therefore, the terms used in the present disclosure need to be defined on the basis of the meanings of the terms and the contents throughout the present disclosure rather than simple names of the terms.

In the disclosure, an expression "have", "may have", "include", "may include", or the like, indicates the existence of a corresponding feature (for example, a numerical value, a function, an operation, or a component such as a part), and does not exclude the existence of an additional feature.

In the present disclosure, an expression "A or B", "at least one of A and/or B", "one or more of A and/or B", or the like, may include all possible combinations of items enumerated together. For example, "A or B", "at least one of A and B" or "at least one of A or B" may indicate all of 1) a case of including only A, 2) a case of including only B, or 3) a case of including both of A and B.

Expressions "first", "second", and the like, used in the disclosure may describe various components regardless of the sequence and/or importance of the components. The expression is used simply to distinguish one component from another component, and does not limit the corresponding component.

If any component (for example, a first component) is mentioned to be "(operably or communicatively) coupled with/to" or "connected to" another component (for example, a second component), it is to be understood that any component may be directly coupled to another component or may be coupled to another component through still another component (for example, a third component).

An expression "configured (or set) to" used in the present disclosure may be replaced by an expression "suitable for", "having the capacity to", "designed to", "adapted to", "made to", or "capable of" based on a situation. The expression "configured (or set) to" may not necessarily indicate "specifically designed to" in hardware.

An expression "a device configured to" in some contexts may indicate that the device may "perform~" together with another device or component. For example, "a processor configured (or set) to perform A, B and C" may indicate a dedicated processor (for example, an embedded processor) that may perform the corresponding operations or a generic-purpose processor (for example, a central processing unit (CPU) or an application processor) that may perform the corresponding operations by executing one or more software programs stored in a memory device.

A term of a singular number may include its plural number unless explicitly indicated otherwise in the context. It is to be understood that a term "include", "formed of", or the like used in the application specifies the presence of features, numerals, steps, operations, components, parts, or combinations thereof, mentioned in the disclosure, and does not preclude the presence or addition of one or more other features, numerals, steps, operations, components, parts, or combinations thereof.

In the disclosure, a "module" or a "~er/or" may perform at least one function or operation, and be implemented in hardware or software, or be implemented by a combination of hardware and software. In addition, a plurality of "modules" or a plurality of "~ers/~ors" may be integrated into at least one module and implemented by at least one processor (not shown), except for a "module" or a "~er/or" that needs to be implemented by specific hardware.

Various elements and regions in the drawings are schematically shown. Therefore, the spirit of the present disclosure is not limited by relative sizes or spacings shown in the accompanying drawings.

Hereinafter, various embodiments of the present disclosure are described in greater detail with reference to the accompanying drawings.

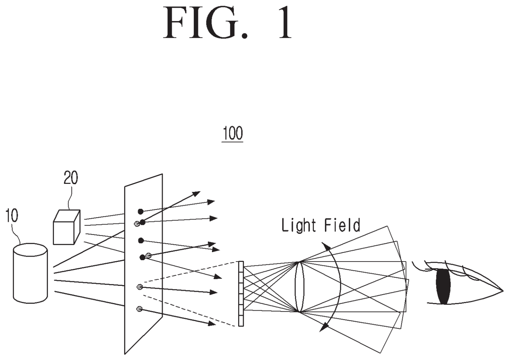

FIG. 1 is a diagram illustrating an example operation of an electronic apparatus according to various embodiments.

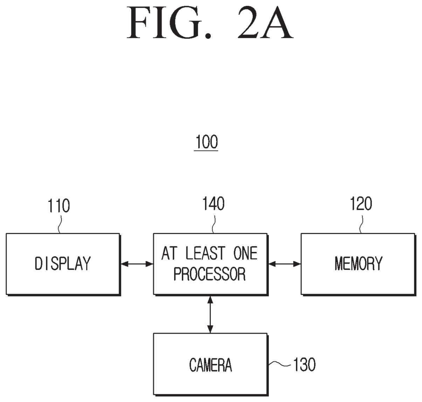

An electronic apparatus 100 (e.g., refer to FIG. 2A) may be implemented, for example, and without limitation, as various types of display devices such as a television (TV), a monitor, a kiosk, a tablet personal computer (PC), an electronic picture frame, a mobile phone, a large format display (LFD), a digital signage, a digital information display (DID), a video wall, a projector display, or the like. However, in some cases, the electronic apparatus 100 may be implemented as an image processing device (for example, a set-top box or a one connected box) that is connected to a display device and provides an image.

According to an embodiment, the electronic apparatus 100 may include a light field display. The light field display may be implemented using display technology that provides a more realistic visual experience by expressing light field information, unlike an existing two-dimensional (2D) or three-dimensional (3D) display.

In general, the 2D or 3D display may provide limited information on the direction and depth of light. However, the light field display may provide a visual experience similar to that observed in a real world by expressing additional information on the direction and depth of light using the light field information. As an example, the light field display may be used to provide a more realistic environment in virtual reality and/or augmented reality devices.

FIG. 1 is a diagram illustrating an example operation of the light field display using a lenticular lens method. Referring to FIG. 1, a series of display pixels may be assigned to each lenticular lens, for example, a micro lens array, and light from each pixel may be directed in a specific direction by the lens, thus forming a light field expressed in the intensity and direction of light. A user may feel a sense of three-dimensionality in case of gazing at the display within the light field formed in this way.

According to an embodiment, the electronic apparatus 100 may display a depth of an object(10, 20) in a virtual 3D space provided through a display 110 (refer to FIG. 2A) by moving the same based on a user position movement, for example, a position movement of user eyes or head, in a real 3D space where the user is positioned.

Hereinafter, the description describes various embodiments of identifying the user position movement in the real 3D space where the user is positioned and mapping the same to the virtual 3D space.

FIG. 2A is a block diagram illustrating an example configuration of the electronic apparatus according to various embodiments.

Referring to FIG. 2A, the electronic apparatus 100 may include the display 110, a memory 120, a camera 130, and at least one processor (e.g., including processing circuitry) 140.

The display 110 may be implemented as a display including a self-light emitting element or a display including a non self-light emitting element and a backlight. For example, and without limitation, the display 110 may be implemented in various types of displays such as a liquid crystal display (LCD), an organic light emitting diode (OLED) display, a light emitting diode (LED) display, a micro light emitting diode (micro LED) display, a mini LED display, a plasma display panel (PDP), a quantum dot (QD) display, and a quantum dot light-emitting diode (QLED) display. The display 110 may also include a driving circuit, a backlight unit, and the like, which may be implemented in a form such as an a-si thin film transistor (TFT), a low temperature poly silicon (LTPS) TFT, or an organic TFT (OTFT). As an example, a touch sensor detecting a touch operation while having the form of a touch film, a touch sheet, a touch pad, or the like may be disposed on a front surface of the display panel 110, and may be implemented to detect various types of touch input. For example, the display 110 may detect various types of touch input, such as touch input by a user hand, touch input by an input device such as a stylus pen, and touch input by a specific electrostatic material. Here, the input device may be implemented as a pen-type input device that may be referred to by various terms such as an electronic pen, a stylus pen, and an S-pen. As an example, the display 110 may be implemented as a flat display, a curved display, a foldable and/or rollable flexible display.

The memory 120 may store data necessary for the various embodiments. The memory 120 may be implemented in the form of a memory embedded in an electronic apparatus 100, or may be implemented in the form of a memory detachable from the electronic apparatus 100, based on a data storing purpose. For example, data for driving the electronic apparatus 100 may be stored in the memory embedded in the electronic apparatus 100', and data for an extension function of the electronic apparatus 100 may be stored in the memory detachable from the electronic apparatus 100. The memory embedded in the electronic apparatus 100 may be implemented as at least one of a volatile memory (for example, a dynamic random access memory (DRAM), a static RAM (SRAM), or a synchronous dynamic RAM (SDRAM)), or a non-volatile memory (for example, an one time programmable read only memory (OTPROM), a programmable ROM (PROM), an erasable and programmable ROM (EPROM), an electrically erasable and programmable ROM (EEPROM), a mask ROM, a flash ROM, a flash memory (for example, a NAND flash or a NOR flash), a hard drive, or a solid state drive (SSD)). In addition, the memory detachable from the electronic apparatus 100 may be implemented in the form of a memory card (for example, a compact flash (CF), a secure digital (SD), a micro secure digital (Micro-SD), a mini secure digital (Mini-SD), an extreme digital (xD), or a multi-media card (MMC)), an external memory which may be connected to a universal serial bus (USB) port (for example, a USB memory), or the like.

As an example, the memory 120 may store at least one instruction for controlling the electronic apparatus 100 or a computer program including the instructions.

As another example, the memory 120 may store an input image, for example, an image received from an external device (for example, a source device), an external storage medium (for example, the USB), an external server (for example, a web hard drive), or the like. Alternatively, the memory 120 may store an image acquired through a camera disposed at the electronic apparatus 100.

As still another example, the memory 120 may store information, algorithms, image quality parameters, or the like for performing at least one of various information required for an image quality processing, for example, noise reduction, detail enhancement, tone mapping, contrast enhancement, color enhancement, or frame rate conversion.

According to an embodiment, the memory 120 may be implemented as a single memory for storing data generated in various operations according to the present disclosure. However, according to an embodiment, the memory 120 may be implemented to include a plurality of memories respectively storing different types of data or respectively storing data generated in different steps.

In the embodiment described above, various data are described as being stored in the external memory 120 of the processor 140. However, at least some of the data described above may be stored in an internal memory of the processor 140 according to at least one implementation example of the electronic apparatus 100 or the processor 140.

At least one camera 130 may be turned on based on a predetermined event and perform a capture. For example, at least one camera 130 may perform the capture in response to the event where the electronic apparatus 100 (or the display 110) is turned on. The camera 130 may convert a captured image into an electrical signal and generate image data based on the converted signal. For example, an object may be converted into an electrical image signal by a charge coupled device (CCD), and the converted image signal may be amplified and converted into a digital signal and then signal-processed. For example, at least one camera 130 may include at least one of a normal (or primary) camera, an ultra-wide camera, or a depth camera.

As an example, at least one camera 130 may be disposed at a position enabling the camera to capture the front of the display 110. For example, at least one camera 130 may be disposed in a central region of a top bezel of the display 110.

As an example, at least one camera 130 may be disposed in a direction and angle enabling the camera to capture the front of the display 110. As an example, the camera 130 may be disposed in a direction and angle in which the camera may be recognized as facing the front of the display 110 if a user gaze faces the front in the captured image.

As an example, at least one camera 130 may include a plurality of cameras spaced apart from each other by a predetermined (e.g., specified) spacing to capture different viewpoints. For example, the predetermined spacing may be the same/similar distance between human eyes, and is not limited thereto.

At least one processor 140 may include various processing circuitry and control overall operations of the electronic apparatus 100. For example, at least one processor 140 may be connected to each component of the electronic apparatus 100 to thus control the overall operations of the electronic apparatus 100. For example, at least one processor 140 may be electrically connected to the display 110 and the memory 120 to thus control the overall operations of the electronic apparatus 100. At least one processor 140 may include one or more processors. For example, at least one processor 140 may include various processing circuitry and/or multiple processors. For example, as used herein, including the claims, the term "processor" may include various processing circuitry, including at least one processor, wherein one or more of at least one processor, individually and/or collectively in a distributed manner, may be configured to perform various functions described herein. As used herein, when "a processor", "at least one processor", and "one or more processors" are described as being configured to perform numerous functions, these terms cover situations, for example and without limitation, in which one processor performs some of recited functions and another processor(s) performs other of recited functions, and also situations in which a single processor may perform all recited functions. Additionally, the at least one processor may include a combination of processors performing various of the recited /disclosed functions, e.g., in a distributed manner. At least one processor may execute program instructions to achieve or perform various functions.

At least one processor 140 may perform the operation of the electronic apparatus 100 according to the various embodiments by executing at least one instruction stored in the memory 120.

As an example, an artificial intelligence related function according to the present disclosure may be operated using the processor and memory of the electronic apparatus.

At least one processor 140 may include one or more processors. Here, one or more processors may include at least one of the central processing unit (CPU), the graphic processing unit (GPU), or a neural processing unit (NPU), and are not limited to the examples of the processor described above.

The CPU is a generic-purpose processor which may perform not only general calculations but also artificial intelligence calculations, and may efficiently execute complex programs through a multi-layered cache structure. The CPU may be advantageous for a serial processing method that enables organic linkage between a previous calculation result and a next calculation result through sequential calculations. The generic-purpose processor is not limited to the above examples unless specified as the above-mentioned CPU.

The GPU is a processor for large-scale calculations such as floating-point calculations used for graphics processing, and may perform the large-scale calculations in parallel by integrating a large number of cores. In particular, the GPU may be advantageous for a parallel processing method such as convolution calculation compared to the CPU. In addition, the GPU may be used as a coprocessor to supplement the function of the CPU. The processor for the large-scale calculations is not limited to the above example unless specified as the above-mentioned GPU.

The NPU is a processor specialized in the artificial intelligence calculation using an artificial neural network, and each layer included in the artificial neural network may be implemented in hardware (e.g., silicon). Here, the NPU is specially designed based on requirements of a company, and may thus have a lower degree of freedom than the CPU or the GPU. However, the NPU may efficiently process the artificial intelligence calculation required by the company. As the processor specialized for the artificial intelligence calculation, the NPU may be implemented in various forms such as a tensor processing unit (TPU), an intelligence processing unit (IPU), or a vision processing unit (VPU). The artificial intelligence processor is not limited to the above example unless specified as the above-mentioned NPU.

In addition, at least one processor 140 may be implemented in a system on chip (SoC). Here, the SoC may further include the memory 120, and a network interface such as a bus for data communication between the processor 140 and the memory 120, in addition to at least one processor 140.

If the system on chip (SoC) included in the electronic apparatus 100 includes the plurality of processors, the electronic apparatus 100 may use some processors among the plurality of processors to perform the artificial intelligence related calculation (e.g., calculation related to the learning or inference of an artificial intelligence model). For example, the electronic apparatus may perform the artificial intelligence related calculation using at least one of the GPU, the NPU, the VPU, the TPU, or a hardware accelerator that is specialized for the artificial intelligence calculation such as convolution calculation and matrix multiplication calculation among the plurality of processors 140. However, this configuration shows only one or more embodiments, and the electronic apparatus may process the artificial intelligence related calculation using the generic-purpose processor such as the CPU.

In addition, the electronic apparatus 100 may perform calculation for an artificial intelligence related function using multi-cores (e.g., dual-core or quad-core) included in one processor 140. In particular, the electronic apparatus may perform the artificial intelligence calculation such as the convolution calculation and the matrix multiplication calculation in parallel using the multi-cores included in the processor 140.

At least one processor 140 may control input data to be processed according to a predefined operation regulation or the neural network model (or the artificial intelligence model) stored in the memory 120. The predefined operation regulation or the artificial intelligence model may be acquired by learning.

Here, "acquired by learning" may indicate that the predefined operation regulation or artificial intelligence model of a desired feature is acquired by applying a learning algorithm to a lot of learning data. Such learning may be performed by a device itself in which the artificial intelligence is performed according to the present disclosure, or by a separate server/system.

The artificial intelligence model may include a plurality of neural network layers. At least one layer has at least one weight value, and an operation of the layer may be performed through an operation result of a previous layer and at least one defined operation. Examples of the neural network may include a convolutional neural network (CNN), a recurrent neural network (RNN), a deep neural network (DNN), a restricted Boltzmann machine (RBM), a deep belief network (DBN), a bidirectional recurrent deep neural network (BRDNN), a deep Q-network, a transformer, or the like. However, the neural network of the present disclosure is not limited to the above examples unless a type of the neural network is specified.

The learning algorithm is a method of training a predetermined target device (e.g., robot) using a large number of learning data for the predetermined target device to make a decision or a prediction for itself. Examples of the learning algorithm may include a supervised learning algorithm, an unsupervised learning algorithm, a semi-supervised learning algorithm, or a reinforcement learning algorithm. However, the learning algorithm of the present disclosure is not limited to the above-described examples unless otherwise specified. Hereinafter, for convenience of explanation, at least one processor 140 is referred to as the processor 140.

According to an embodiment, the electronic apparatus 100 may receive various compressed images or images of various resolutions. For example, the electronic apparatus 100 may receive the image in a compressed form such as moving picture experts group (MPEG) (for example, MP2, MP4, or MP7), joint photographic coding experts group (JPEG), advanced video coding (AVC), H.264, H.265, or high efficiency video codec (HEVC). The electronic apparatus 100 may receive any one of a standard definition (SD) image, a high definition (HD) image, a full HD image, an ultra HD image.

As an example, the processor 140 may image-process the input image and acquire an output image. Here, the image processing may include, for example, and without limitation, at least one of image enhancement, image restoration, image transformation, image analysis, image understanding, image compression, image decoding, scaling, or the like.

In the disclosure, as a term referring to a portion of the image, "region" may refer, for example, to at least one pixel block or a set of pixel blocks. In addition, the pixel block may refer, for example, to a set of adjacent pixels that includes at least one pixel.

As an example, the input image may include a 3D image. For example, the input image may include a side-by-side image. The side-by-side image may be an image format where two images are disposed side by side on one screen. For example, each image may occupy half of a horizontal space of the screen. One image may be included in a left region and the other image may be included in a right region. For example, the image positioned in the left region may be a left-eye image, and the image positioned in the right region may be a right-eye image.

As an example, if a plurality of frames included in the input image are sequentially input, the processor 140 may store the plurality of frames in the memory 120, and read the frames stored in the memory 120, thereby performing various processing. The frame is a basic image unit in image content, and each frame includes a pixel and may include resolution and color information. Hereinafter, the content may include one frame included in the image content or the plurality of frames of a predetermined number, which may be collectively referred to as the content for convenience of explanation.

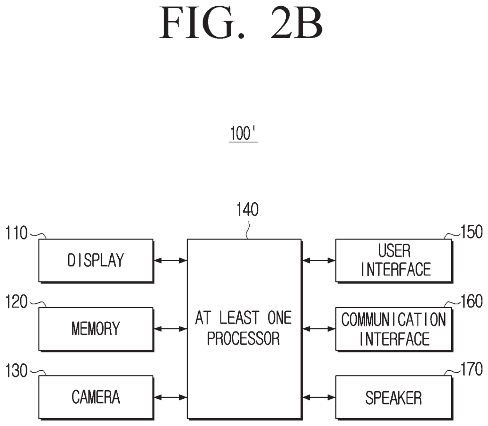

FIG. 2B is a block diagram illustrating an example configuration of the electronic apparatus according to various embodiments.

Referring to FIG. 2B, an electronic apparatus 100' may include the display 110, the memory 120, the camera 130, at least one processor (e.g., including processing circuitry) 140, a user interface (e.g., including various circuitry) 150, a communication interface (e.g., including communication circuitry) 160, and a speaker 170. The description may not repeat detailed descriptions of components that overlap the components shown in FIG. 2A among the components shown in FIG. 2B.

The user interface 150 may include various circuitry and be implemented as a device such as a button, a touch pad, a mouse or a keyboard, or may be implemented as a touch screen or the like which may also perform a manipulation input function in addition to the above-described display function.

The communication interface 160 may include various communication circuitry and be implemented as various interfaces based on an implementation example of the electronic apparatus 100'. For example, the communication interface 160 may communicate with the external device, the external storage medium (e.g., USB memory), the external server (e.g., web hard drive), or the like using a communication method such as a Bluetooth, an access point (AP) based wireless fidelity (Wi-Fi, e.g., wireless local area network (LAN)), a Zigbee, a wired/wireless local area network (LAN), a wide area network (WAN), Ethernet, an IEEE 1394, a high-definition multimedia interface (HDMI), a universal serial bus (USB), a mobile high-definition link (MHL), an audio engineering society/European broadcasting union (AES/EBU) communication, an optical communication, or a coaxial communication. As an example, the communication interface 160 may perform communication with another electronic apparatus, the external server and/or a remote control apparatus, or the like.

The speaker 170 may be a component for outputting not only various audio data but also various notification sounds, voice messages, or the like. The processor 130 may control the speaker 170 to output feedbacks or various notifications in an audio form according to the various embodiments of the present disclosure.

In addition, the electronic apparatus 100' may include a sensor, a microphone, or the like in various implementation examples.

The sensor may include various types of sensors, such as the touch sensor, a proximity sensor, an acceleration sensor (or a gravity sensor), a geomagnetic sensor, a gyro sensor, a pressure sensor, a position sensor, a distance sensor, or a light sensor.

The microphone is a component for receiving a user voice or another sound and converting the same into audio data. However, according to an embodiment, the electronic apparatus 100' may receive the user voice, which is input through the external device, through the communication interface 160.

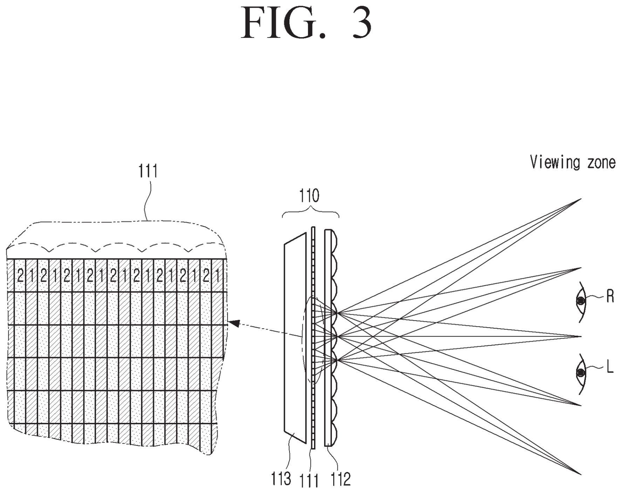

FIG. 3 is a diagram illustrating an example structure and operation of a display 110 according to various embodiments.

Referring to FIG. 3, the display 110 may include a display panel 111, a field of view separator 112, and a backlight unit 113. However, the backlight unit 113 may not be included in the display 110 in various implementation examples of the display 110.

The display panel 111 may include a plurality of pixels including a plurality of sub-pixels. Here, the sub-pixel may include red (R), green (G), and blue (B) pixels. For example, the display panel 111 may include pixels each including the R, G, and B sub-pixels and arranged in multiple row and column directions.

The display panel 111 may display a binocular view image (or a multi-view image). For example, the display panel 111 may display an image where the plurality of images including the right-eye image and the left-eye image are sequentially and repeatedly disposed.

The field of view separator 112 may be disposed in front of the display panel 111 and may provide a multi-view, e.g., different viewpoints for each viewing zone. In this case, the field of view separator 112 may be implemented as the lenticular lens or a parallax barrier. As an example, the field of view separator 112 may be implemented as the lenticular lens including a plurality of lens regions. Accordingly, the lenticular lens may refract an image displayed on the display panel 111 through the plurality of lens regions. Each lens region may have a size corresponding to at least one pixel, thus dispersing light passing through each pixel differently for each viewing zone. As another example, the field of view separator 112 may be implemented as the parallax barrier. The parallax barrier may be implemented as an array of transparent slits including a plurality of barrier regions. Accordingly, the field of view separator 112 may block light using the slit between the barrier regions to allow an image having the different viewpoint for each viewing zone to be output.

As an example, the field of view separator 112 may be implemented to be operated while being inclined at a certain angle to improve an image quality, that is, to avoid resolution reduction. In this case, the processor 140 may segment the right-eye image and the left-eye image based on the angle at which the field of view separator 112 is inclined, and combine the images to generate the multi-view image. Accordingly, the user may watch an image displayed while having a constant inclination on the sub-pixels of the display panel 111 rather than an image displayed vertically or horizontally on the sub-pixels.

As an example, the field of view separator 112 may be implemented as an active type. For example, the field of view separator 112 may be implemented as an active lenticular lens or an active parallax barrier. As an example, the field of view separator 112 may be implemented as a lenticular lens array as shown in FIG. 3B.

As an example, the field of view separator 112 may be implemented as a lenticular lens array as shown in FIG. 3. If the display 110 is operated in a 3D mode, the processor 140 may control the lenticular lens 112 to be operated in the 3D mode by applying a predetermined voltage corresponding to the 3D mode to the active-type lenticular lens 112. In addition, if the display 110 is operated in a 2D mode, the processor 140 may control the lenticular lens 112 to be operated in the 2D mode by applying a predetermined voltage corresponding to the 2D mode to the active-type lenticular lens 112.

As an example, the lenticular lens 112 may include a plurality of micro lenticular lenses, and have a lens pattern formed within a gap between the display panel 111 and the lenticular lens 112.

For example, as shown in FIG. 3, the lenticular lens 112 may include a replica where a liquid crystal fills a transparent frame made of micro lens-shaped polyimide (PI), and the outside is made of a material having the same refractive index as a liquid crystal molecule in a voltage-applied state. Indium tin oxide (ITO) electrodes to which the voltage is applied may be disposed above and below the micro lens having this structure. In the 3D mode, where a voltage A is not applied, a difference in the refractive index may occur between the internal liquid crystal molecule and the external replica, thus resulting in an effect of light passing through the lenticular lens. On the other hand, in the 2D mode, where a voltage B is applied, a state of the liquid crystal may be changed to have the same refractive index as the external replica, thus allowing input light to pass through as it is.

The backlight unit 113 may include a backlight and provide light to the display panel 111. Left-eye and right-eye images 1 and 2 formed on the display panel 111 by light provided by the backlight unit 113 may be projected onto the field of view separator 112, and the field of view separator 112 may disperse light of each projected image 1 or 2 and transmit the same toward a viewer. For example, the field of view separator 112 may generate exit pupils at a viewer position, that is, a viewing distance. As shown in FIG. 3A, the thickness and diameter of the lenticular lens if the field of view separator 112 is implemented as the lenticular lens array, and the slit spacing or the like of the field of view separator 112 if the separator 112 is implemented as the parallax barrier may be designed for the exit pupils generated by the respective rows to be separated by an average binocular center distance of less than 65 mm.

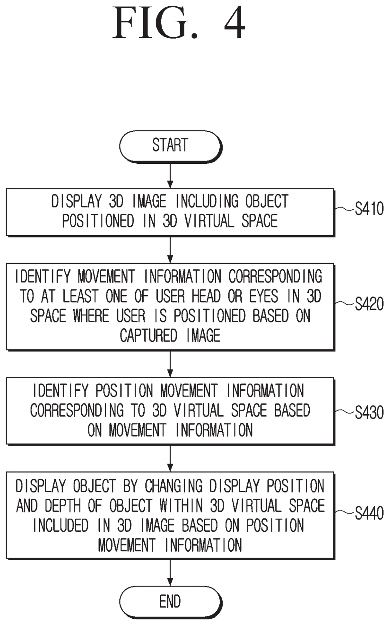

FIG. 4 is a flowchart illustrating an example method of controlling an electronic apparatus according to various embodiments.

Referring to FIG. 4, in operation S410, the electronic apparatus 100 may display the 3D image including an object positioned in the 3D virtual space through the display 110.

As an example, the 3D image may be a user interface (UI) screen that includes at least one object positioned in the 3D virtual space. For example, the UI screen may be a home UI screen that includes a plurality of applications. In this case, the object may include UI elements corresponding to the plurality of applications. However, the UI screen is not necessarily limited to the home UI screen, and may include the UI screen such as a menu setting screen.

As an example, the 3D image may be a VR content screen such as a game content screen, an entertainment content screen, or a fitness content screen. In this case, the object may be an input control element such as the user head, the user hand, a pointer, or a cursor.

As an example, the 3D image may be a general content screen such as a movie content screen. In this case, the object may be an UI element such as a content control menu.

In operation S420, the electronic apparatus 100 may identify the user movement information in the 3D space where the user is positioned based on the captured image acquired by the camera 130. As an example, the user movement information may be movement information corresponding to at least one of the user head or eyes. Hereinafter, for the convenience of explanation, the description assumes that the user movement information is the user eye movement information.

As an example, the electronic apparatus 100 may identify at least one of the user head or eyes in the captured image acquired by the camera 130. For example, the electronic apparatus 100 may identify an object region included in the captured image using at least one technique among object recognition, object detection, object tracking, or image segmentation. For example, the electronic apparatus 100 may identify the user using a technique such as semantic segmentation which classifies and extracts the objects included in the input image by type, instance segmentation which recognizes the objects by classifying the objects by type even in case that the objects are the same type, or a bounding box which has the shape of a square that includes detected objects in case of detecting the objects included in the image, if necessary.

As an example, the electronic apparatus 100 may identify a user face in the captured image, and identify the user eyes in the user face. For example, a facial region detection method may use various conventional methods. In detail, the facial region detection method may use a direct recognition method and a statistical method. In the direct recognition method, a regulation may be set using a physical feature such as the outline or skin color of a facial image, a size of its component, a distance between the components, or the like, and comparison, inspection, and measurement may be performed based on the regulation. In the statistical method, the facial region may be detected based on a pre-learned algorithm. For example, the statistical method may include a method of converting unique features included in the input facial image into data and analyzing and comparing the data with a large database (of face and other object shapes). In particular, the facial region may be detected based on the pre-learned algorithm using methods such as multi layer perceptron (MLP) and support vector machine (SVM). In a similar way, a user eye region may be identified.

As an example, the electronic apparatus 100 may identify the user eyes in the captured image using the trained artificial intelligence model. For example, the artificial intelligence model may be implemented as the neural network including the plurality of neural network layers. The artificial intelligence model may be implemented as a deep neural network (DNN), a convolutional neural network (CNN), a recurrent neural network (RNN), a restricted Boltzmann machine (RBM), a deep belief network (DBN), a bidirectional recurrent deep neural network (BRDNN), a deep Q-network, or the like, and is not limited thereto.

For example, the user movement information, for example, the user eye movement information, may include movement distance information and movement direction information. For example, the user movement information may include movement distance information and movement direction information in a three-dimensional space using the coordinate system of x, y, and z axes.

In operation S430, the electronic apparatus 100 may identify position movement information corresponding to the 3D virtual space based on the identified user movement information.

As an example, the electronic apparatus 100 may identify, for example, the position movement information in the 3D virtual space based on the user eye movement information. For example, the user eye movement information and the position movement information in the 3D virtual space may each be relative movement information having distance and direction information.

In operation S440, the electronic apparatus 100 may control the display 110 to display the object by changing the display position and depth of the object within the 3D virtual space included in the 3D image based on the identified position movement information.

As an example, the depth may include data that indicates how far each pixel in the image is from the camera. The depth may be usually provided in pixel units, and a value of each pixel may indicate a distance to the object at a corresponding position. For example, if the depth of a specific object is large, a left-right binocular parallax may be large, and the user may thus feel a relatively large sense of three-dimensionality, and if the depth is small, the left-right binocular parallax may be small, and the user may thus feel a relatively small sense of three-dimensionality.

As an example, the electronic apparatus 100 may control the display 110 to display the object by changing the display position and depth of the object based on first movement distance information and first movement direction information corresponding to the 3D virtual space.

As an example, the electronic apparatus 100 may identify the first movement distance information and the first movement direction information corresponding to the 3D virtual space based on the user movement information, for example, second movement distance information and second movement direction information corresponding to the user eye movement information. For example, the electronic apparatus 100 may perform an operation for mapping the user eye movement information in the 3D space to the movement information in the 3D virtual space provided through the display 110. For example, the electronic apparatus 100 may acquire the first movement distance information and the first movement direction information by scaling the second movement distance information and the second movement direction information to correspond to the 3D virtual space. For example, the electronic apparatus 100 may scale the second movement distance information to the first movement distance information based on a first scaling factor. For example, the electronic apparatus 100 may scale the second movement direction information to the first movement direction information based on the second scaling factor. The scaling factor may be referred to by various terms such as a scaling value, a conversion factor, a conversion value, an adjustment factor, and an adjustment value, which is referred to as the scaling factor hereinafter.

As an example, the electronic apparatus 100 may acquire the left-eye image and the right-eye image for providing the 3D image based on the first movement distance information and the first movement direction information corresponding to the 3D space. For example, the electronic apparatus 100 may acquire the left-eye image and the right-eye image, in which the display position and depth of the object are changed, based on the first movement distance information and the first movement direction information. For example, the electronic apparatus 100 may acquire the output image by respectively sub-sampling the left-eye image and the right-eye image, in which the display position and depth of the object are changed, by half horizontally, and then alternately disposing the images. For example, the electronic apparatus 100 may provide an output image 60 in which the left-eye and right-eye images 1 and 2 are sequentially and repeatedly disposed, as described above with reference to FIG. 3.

According to an embodiment, the electronic apparatus 100 may generate the output image for the viewpoint to be changed smoothly and continuously between consecutive frames using filtering. As an example, the processor 140 may generate the output image for the viewpoint to be changed smoothly between the consecutive frames using an infinite impulse response (IIR) filter or a finite impulse response (FIR) filter. Accordingly, the processor 140 may acquire the natural output image in which a depth difference of the binocular image is maintained even in case that a user position is changed.

According to an embodiment, the 3D image provided by the electronic apparatus 100 may include the plurality of objects positioned in the 3D virtual space.

As an example, the electronic apparatus 100 may identify a moving target object among the plurality of objects based on a current position of the user eyes. For example, the electronic apparatus 100 may identify the object at the corresponding position as the moving target object by mapping the current position of the user eyes to the virtual 3D space provided by the display 110 if the current position of the user eyes is identified in the 3D space where the user is positioned.

As an example, the electronic apparatus 100 may identify the moving target object among the plurality of objects based on a user selection command. For example, the electronic apparatus 100 may identify the moving target object to be moved based on a user eye movement based on the user selection command such as at least one of voice input, remote control input, or touch input.

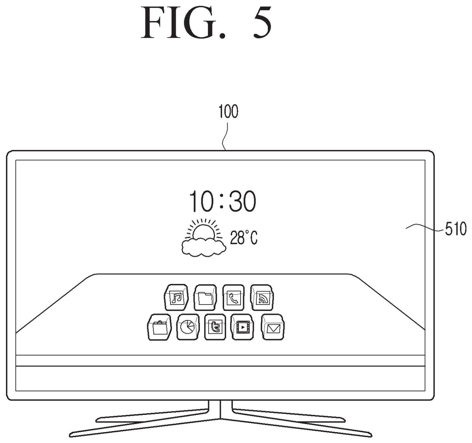

FIG. 4 shows illustrates an example order of operations for convenience of explanation. However, where not required the steps may be performed in parallel with each other, or the like may not be necessarily limited to the corresponding order. FIG. 5 is a diagram illustrating an example of a 3D image according to various embodiments.

As shown in FIG. 5, the 3D image may be a UI screen 510 that includes at least one object positioned in the 3D virtual space. For example, the UI screen 510 may be the home UI screen that includes the UI elements corresponding to the plurality of applications. For example, the UI screen 510 may be the home UI screen having a mode for providing 3D VR content, and is not limited thereto.

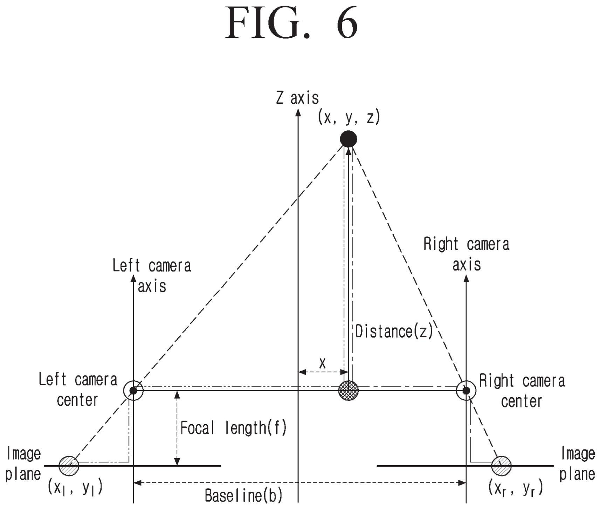

FIG. 6 is a diagram illustrating an example method for tracking the user position according to various embodiments.

According to an embodiment, the electronic apparatus 100 may track a user eye position based on the plurality of captured images acquired by the plurality of cameras. As an example, the electronic apparatus 100 may track the user eye position based on a first captured image and a second captured image that are acquired by the plurality of cameras. As one example, at least one camera 130 may include the plurality of cameras spaced apart from each other by the predetermined spacing to capture the different viewpoints. For example, the predetermined spacing may be the same/similar distance between the human eyes, and is not limited thereto.

In general, a human may receive the 2D image having left/right differences from both eyes, and may perceive a 3D distance through a process of fusing the input images in a human brain. As an example, the electronic apparatus 100 may track the user eye position in the 3D space by the same mechanism.

As an example, the electronic apparatus 100 may identify disparity information based on the first and second captured images, and track the user eye position in the 3D space where the user is positioned based on the disparity information. For example, the electronic apparatus 100 may track the user eye position using disparity, a focal length, and a baseline.

The disparity information may indicate a difference in an x-axis position of the object (for example, the user eyes) that is included equally in the left and right images, and may be, for example, an "x" value in FIG. 6. The focal length may be a distance between an image plane (of a charge-coupled device (CCD) sensor or a complementary metal-oxide-semiconductor (CMOS) sensor, for example) and a camera lens. The baseline may be spacing between a left camera and a right camera.

FIG. 6 illustrates a state where one point (x, y, z) in the 3D space is imaged on the image planes of the left and right cameras. An equation for 3D distance information may be derived in the following order.

The point (x, y, z) in the 3D space may be imaged on the image plane by passing through each center of lenses of the left and right cameras. Assume that y-axes of the left and right cameras are the same. In this case, proportional expressions such as Equations 1 and 2 below may be derived for each of right-angled dashed lines on left and right sides of FIG. 6.

[Equation 1]

$$x_{l*}z = f\left(x + \frac{b}{2}\right)$$

Here, b indicates the baseline, and f indicates the focal length. However, the baseline and the focal length may be fixed constants because these parameters are physical elements.

[Equation 2]

$$x_{l*}z = f\left(x - \frac{b}{2}\right)$$

In this case, Equation 3 may be derived from Equations 1 and 2.

[Equation 3]

$$z = \frac{b*f}{x_l - x_r} = \frac{b*f}{d}$$

z indicates a real 3D distance. Here, d indicates the disparity.

The electronic apparatus 100 may acquire the user eye movement information based on the previous and current coordinates of the user eyes if the coordinates (x, y, z) in the 3D space corresponding to the user eyes are identified by the above-described method.

The description describes the method of acquiring the user eye movement information using the plurality of cameras with reference to FIG. 6. However, the user eye movement information may also be acquired using one camera, for example, the depth camera.

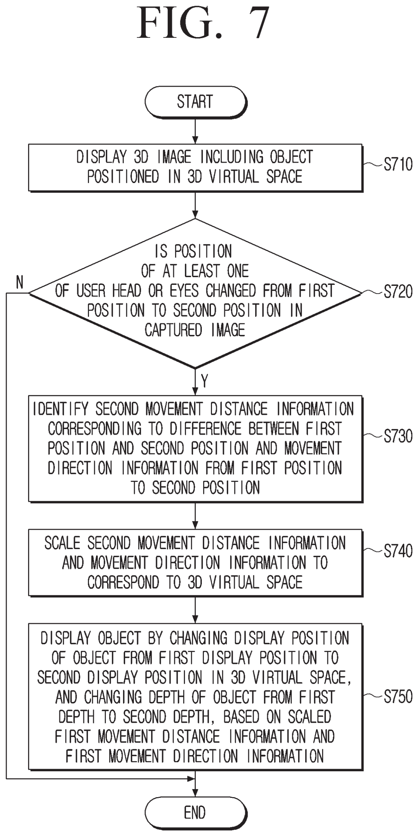

FIG. 7 is a flowchart illustrating an example method of controlling an electronic apparatus according to various embodiments.

Referring to FIG. 7, in operation S710, the electronic apparatus 100 may display the 3D image including the object positioned in the 3D virtual space through the display 110.

In operation S720, the electronic apparatus 100 may identify whether a position of at least one of the user head or eyes is changed from a first position to a second position in the captured image acquired by the camera 130. As an example, the electronic apparatus 100 may track the user head or the user eyes. However, for convenience of explanation, the following description assumes that the electronic apparatus 100 tracks the user eyes.

As an example, the first position or the second position may be any position having different coordinate values in the 3D space where the user is positioned. For example, the first position or the second position may be acquired in the manner described with reference to FIG. 6.

If the user eyes are identified as being changed from the first position to the second position (S720-Y), in operation S730, the electronic apparatus 100 may identify the second movement distance information corresponding to a difference between the first position and the second position and the second movement direction information from the first position to the second position.

As an example, the electronic apparatus 100 may identify the second movement distance information based on three-axis coordinate values corresponding to the first position and three-axis coordinate values corresponding to the second position. For example, the three-axis coordinate values corresponding to the first position and the three-axis coordinate values corresponding to the second position may each include x, y, and z coordinates in an XYZ space.

As an example, the electronic apparatus 100 may identify the second movement direction information based on three-axis angular velocity values from the first position to the second position. For example, the three-axis angular velocity values may include roll, pitch, and yaw values.

In operation S740, the electronic apparatus 100 may scale the second movement distance information and the second movement direction information to correspond to the 3D virtual space.

As an example, the electronic apparatus 100 may acquire the first movement distance information and the first movement direction information by scaling the second movement distance information and the second movement direction information to correspond to the 3D virtual space. For example, the electronic apparatus 100 may scale the second movement distance information to the first movement distance information based on the first scaling factor. For example, the electronic apparatus 100 may scale the second movement direction information to the first movement direction information based on the second scaling factor.

As an example, the first scaling factor and the second scaling factor may be predetermined values based on specifications of the electronic apparatus 100. For example, the specifications of the electronic apparatus 100 may include specifications of hardware elements included in the electronic apparatus 110, such as the performance and resolution of the display 100 and the angle of view and placement of the camera 130.

As an example, at least one of the first scaling factor or the second scaling factor may be adjusted based on a user setting.

As an example, at least one of the first scaling factor or the second scaling factor may be adjusted based on a size of the space where the electronic apparatus 100 is positioned (for example, a size of a space in front of the electronic apparatus 100), a type of the space (for example, a private space or a public space), or the like.

As an example, at least one of the first scaling factor or the second scaling factor may be adjusted based on a content feature such as a type of the content or three-dimensional information of the content.

In operation S750, the electronic apparatus 100 may display the object by changing the display position of the object from a first display position to a second display position in the 3D virtual space, and changing the depth of the object from a first depth to a second depth, based on the scaled first movement distance information and first movement direction information.

As an example, in operation S740, the electronic apparatus 100 may acquire a second vector value based on the three-axis coordinate values and the three-axis angular velocity values. For example, the second vector value may be a vector value in the form of a six-axis space matrix, and is not limited thereto. For example, the second vector value may use a rotation matrix R and a position vector d. The rotation matrix R indicates a rotation transformation in the 3D space, and may transform the coordinate system around an origin point based on the rotation. The position vector d may be a translation vector indicating how much to move along each axis.

In operation S740, the second vector value acquired based on the three-axis coordinate values and the three-axis angular velocity values may be an example of the second movement distance information and the second movement direction information corresponding to a relative movement of at least one of the user head or eyes.

As an example, the electronic apparatus 100 may acquire a first vector value by scaling the second vector value. The first vector value may be a vector value corresponding to the first movement distance information and the first movement direction information. For example, the electronic apparatus 100 may acquire the second vector value corresponding to the movement of the 3D image provided by the electronic apparatus 100 in the 3D virtual space by scaling the second vector value corresponding to the user eye movement.

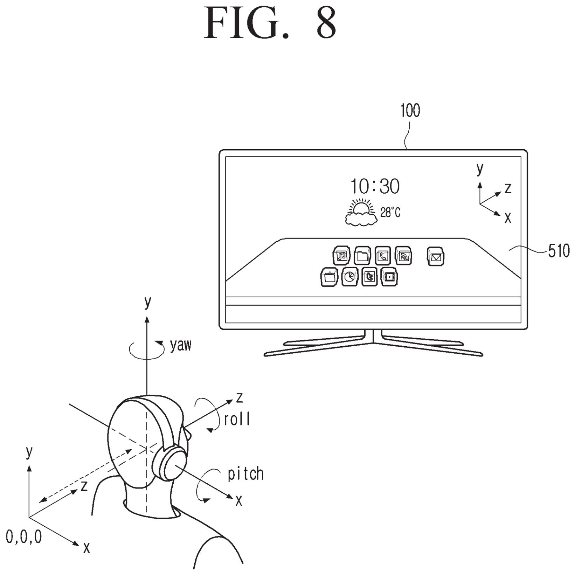

FIG. 7 shows an example order of operations for convenience of explanation. However, where not required, the order of steps may be performed in parallel with each other, or the like may not be necessarily limited to the corresponding order. FIG. 8 is a diagram illustrating an example method for mapping the user movement information and the movement information in the 3D virtual space according to various embodiments.

According to an embodiment, the electronic apparatus 100 may control the display position and depth of the object included in the 3D virtual space provided by the display 110 based on the user movement information. The user movement information may be the movement information of the user head or eyes that is identified in the 3D space where the user is positioned. However, for the convenience of explanation, the movement information of the user head or eyes described above is collectively referred to as the user movement information hereinafter.

As an example, the user movement information may be six-axis spatial information. A six-axis space may include not only x, y, and z coordinates, in the 3D space having the x, y, and z axes, but also the three-axis angular velocity values. For example, the three-axis angular velocity values may be a rotational velocity of the user eyes that is measured around the x, y, and z axes, and indicate the velocity at which the user eyes are rotated around the x, y, and z axes. For example, the three-axis angular velocity values may include the roll, pitch, and yaw values. For example, the roll value may be a velocity at which the user eyes are rotated around the z-axis, the pitch value may be a velocity at which the user eyes are rotated around the x-axis, and the yaw value may be a velocity at which the user eyes are rotated around the y-axis.

As an example, the electronic apparatus 100 may acquire control information for controlling a movement of the object included in the 3D virtual space provided by the display 110 based on the identified movement information if the user movement information is identified. For example, the electronic apparatus 100 may convert the three-axis coordinate values and the three-axis angular velocity values corresponding to the user movement into the first vector value. For example, if the user eyes are moved from the first position to the second position in the 3D space, the electronic apparatus 100 may acquire the three-axis coordinate values and the three-axis angular velocity values corresponding to the user eye movement. In this case, the three-axis angular velocity values may be calculated based on the user current position (for example, the current position of the user eyes), and a movement angle may thus be calculated based on the user or toward the user. In this case, the electronic apparatus 100 may move the object within the user's field of view, thus adjusting the three-dimensionality of the object while maintaining crosstalk (x-talk) performance.

As an example, the electronic apparatus 100 may acquire the first vector value for controlling the movement of the object by applying a predetermined scaling factor to the second vector value. The predetermined scaling factor may be a constant value set at manufacturing time, and is not limited thereto. For example, the scaling factor may be a value that may be set and/or changed by the user. For example, the scaling factor may be determined based on the type or property of the moving target object of the 3D image in the 3D virtual space. For example, a different scaling factor may be applied based on whether a moving target element is a manual UI element or an input control element. For example, the manual UI element may include an UI element corresponding to the application, an UI element corresponding to the control menu, or the like. For example, the input control element may be the input control element such as the user head, the user hand, the pointer, or the cursor.

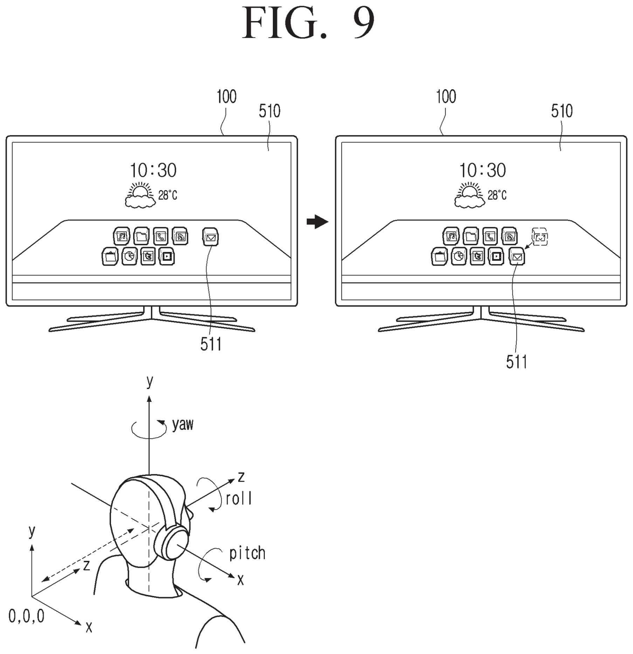

FIG. 9 is a diagram illustrating an example method of controlling the 3D virtual space according to various embodiments.

According to an embodiment, the electronic apparatus 100 may move and display the moving target object based on the user movement information. For example, the electronic apparatus 100 may display the object by changing the display position and depth of the object.

As an example, in the home UI screen 510 corresponding to the virtual 3D space shown in FIG. 9, the electronic apparatus 100 may display a specific object, for example, an application UI element 511, by changing the display position and depth of the object. For example, the electronic apparatus 100 may map the relative movement information of the user eyes to the virtual 3D space and display the object by changing the display position and depth of the object. For example, if the depth of the object is large, the left-right binocular parallax may be large, and the user may thus feel the relatively large sense of three-dimensionality, and if the depth is small, the left-right binocular parallax may be small, and the user may thus feel the relatively small sense of three-dimensionality. In this case, the electronic apparatus 100 may move the application UI element 511 within the user's field of view, thus adjusting the three-dimensionality of the object while maintaining the x-talk performance.

As an example, the electronic apparatus 100 may adjust a velocity at which the display position and depth of the specific object 511 are changed based on a user eye movement velocity. For example, the electronic apparatus 100 may adjust the velocity at which the display position and depth of the specific object 511 are changed to be proportional to the user eye position movement velocity.

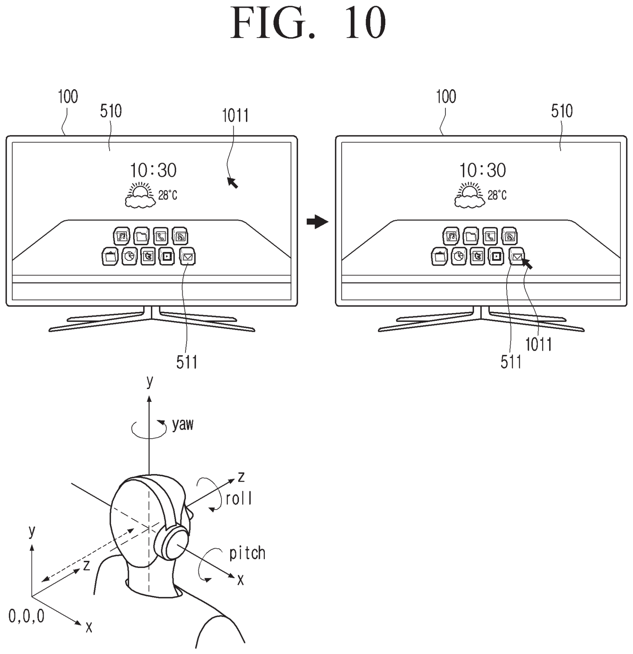

FIG. 10 is a diagram illustrating an example method of controlling the 3D virtual space according to various embodiments.

According to an embodiment, the electronic apparatus 100 may move and display the moving target object based on the user movement information. For example, the electronic apparatus 100 may display the object by changing the display position and depth of the object.

As an example, in the home UI screen 510 corresponding to the virtual 3D space shown in FIG. 10, the electronic apparatus 100 may display a specific object, for example, a pointer 1011, by changing the display position and depth of the object. For example, the electronic apparatus 100 may map the relative movement information of the user eyes to the virtual 3D space and display the object by changing the display position and depth of the object.

For example, if the user wants to move the pointer 1011 to a position corresponding to the application UI element 511 within the 3D virtual space corresponding to the home UI screen 510, the user may move the eyes based on the display position and depth of the application UI element 511. In this case, the electronic apparatus 100 may drag the object included in the 3D virtual space to the desired position and depth within the user's field of view, thus adjusting the three-dimensionality of the object while maintaining the x-talk performance.

According to an embodiment, the electronic apparatus 100 may control the depth of the specific object to be changed smoothly by adjusting the viewpoint to be changed smoothly between the consecutive frames using the infinite impulse response (IIR) filter or the finite impulse response (FIR) filter. For example, in case of adjusting the depth of the specific object based on the user movement in a scene section that includes the plurality of frames, the electronic apparatus 100 may acquire the binocular image in which a depth value of the specific object in the binocular image corresponding to each frame is smoothly changed by applying the IIR filter to the plurality of frames included in each scene.

According to an embodiment, the electronic apparatus 100 may acquire the image (for example, the binocular image) in which the display position and depth of the object are adjusted using the trained artificial intelligence model. For example, the electronic apparatus 100 may train the artificial intelligence model to output the UI screen in which the display position and depth of the object are adjusted in case of receiving the movement information of the user eyes or head and a current UI screen.

As an example, the artificial intelligence model being trained indicates that a basic artificial intelligence model (e.g., the artificial intelligence model including any random parameter) is trained using a large number of training data based on a learning algorithm, thereby generating a predefined operation regulation or the artificial intelligence model, set to perform a desired feature (or purpose). The learning may be conducted through a separate server and/or system, is not limited thereto, and may also be accomplished by the electronic apparatus 100. An example of the learning algorithm may include, the supervised learning, the unsupervised learning, the semi-supervised learning, or the reinforcement learning, and is not limited thereto.

As an example, the trained artificial intelligence model may be an on-device model included in the electronic apparatus 100, and is not limited thereto. For example, the trained artificial intelligence model may be implemented on the server.

Each operation according to the various embodiments described above may be performed by the processor 140, and if necessary, a module for each operation may be used. For example, each module may be implemented as at least one software, at least one hardware, and/or their combination. Each module may be implemented to use a predefined algorithm, a predefined equation, and/or the trained artificial intelligence model to perform the operation. However, at least some modules may be distributed to the external device.

According to the various embodiments described above, the electronic apparatus 100 may calculate the movement angle toward the user using eye tracking and/or head tracking techniques. Accordingly, the electronic apparatus 100 may move the object the within the user's field of view, thus adjusting the three-dimensionality of the object while maintaining the crosstalk (x-talk) performance.

The methods according to the various embodiments of the present disclosure described above may be implemented by software upgrade or hardware upgrade of the conventional electronic apparatus and/or the server.

In addition, the various embodiments of the present disclosure described above may be performed through an embedded server disposed in the electronic apparatus, or a server disposed outside the electronic apparatus.

According to an embodiment of the present disclosure, the various embodiments described above may be implemented in software including an instruction stored in a machine-readable storage medium (for example, a computer-readable storage medium). A machine may be an apparatus that invokes the stored instruction from the storage medium, may be operated based on the invoked instruction, and may include the electronic apparatus (e.g., electronic apparatus 100) according to the disclosed embodiments. If the instruction is executed by the processor, the processor may perform a function corresponding to the instruction directly or using another component under control of the processor. The instruction may include a code provided or executed by a compiler or an interpreter. The machine-readable storage medium may be provided in the form of a non-transitory storage medium. Here, a "non-transitory" storage medium is tangible without including a signal, and does not distinguish whether data are semi-permanently or temporarily stored in the storage medium.

In addition, according to an embodiment of the present disclosure, the method according to the various embodiments described above may be provided by being included in a computer program product. The computer program product may be traded as a product between a seller and a purchaser. The computer program product may be distributed in a form of a storage medium (for example, a compact disc read only memory (CD-ROM)) that may be read by the machine or online through an application store (for example, PlayStore™). In case of the online distribution, at least a portion of the computer program product may be at least temporarily stored in a storage medium such as a memory of a server of a manufacturer, a server of an application store or a relay server, or be temporarily provided.

In addition, each of the components (for example, modules or programs) according to the various embodiments described above may include one entity or a plurality of entities, and some of the corresponding sub-components described above may be omitted or other sub-components may be further included in the various embodiments. Alternatively or additionally, some of the components (e.g., modules or programs) may be integrated into one entity, and may perform functions performed by the respective corresponding components before being integrated in the same or similar manner. Operations performed by the modules, the programs, or other components according to the various embodiments may be executed in a sequential manner, a parallel manner, an iterative manner or a heuristic manner, at least some of the operations may be performed in a different order or be omitted, or other operations may be added.

Although various example embodiments are shown and described in the present disclosure as above, the present disclosure is not limited to the above-mentioned embodiments, and may be variously modified by those skilled in the art to which the present disclosure pertains without departing from the gist of the present disclosure including in the accompanying claims. These modifications should also be understood to fall within the scope and spirit of the present disclosure. It will also be understood that any of the embodiment (s) described herein may be used in conjunction with any other embodiment(s) described herein.

**Claims**

1. An electronic apparatus comprising:

    a display;
    at least one camera;
    a memory storing instructions; and
    at least one processor, comprising processing circuitry;
    wherein at least one processor, individually and/or collectively, is configured to execute the instructions, and to cause the electronic apparatus to:

        display a three-dimensional (3D) image including an object positioned in a 3D virtual space through the display,
        identify movement information corresponding to at least one of a user head or eyes in a 3D space where a user is positioned based on a captured image acquired by the camera,
        identify position movement information corresponding to the 3D virtual space based on the movement information, and
        control the display to display the object by changing the display position and depth of the object within the 3D virtual space included in the 3D image based on the position movement information.

2. The apparatus as claimed in claim 1, wherein at least one processor, individually and/or collectively, is configured to cause the electronic apparatus to:

    identify first movement distance information and first movement direction information corresponding to the position movement information, and
    control the display to display the object by changing the display position and depth of the object in the 3D virtual space based on the first movement distance information and the first movement direction information.

3. The apparatus as claimed in claim 2, wherein at least one processor, individually and/or collectively, is configured to cause the electronic apparatus to:

    identify second movement distance information corresponding to a difference between a first position and a second position and second movement direction information from the first position to the second position based on a position of the at least one of the user head or eyes in the captured image acquired by the camera being changed from the first position to the second position, and
    identify the first movement distance information and the first movement direction information based on the second movement distance information and the second movement direction information.

4. The apparatus as claimed in claim 3, wherein at least one processor, individually and/or collectively, is configured to cause the electronic apparatus to identify the first movement distance information and the first movement direction information by scaling the second movement distance information and the second movement direction information to correspond to the 3D virtual space.

5. The apparatus as claimed in claim 3, wherein at least one processor, individually and/or collectively, is configured to cause the electronic apparatus to:

    identify the second movement distance information based on three-axis coordinate values corresponding to the first position and three-axis coordinate values corresponding to the second position, and
    identify the second movement direction information based on three-axis angular velocity values from the first position to the second position.

**6.** The apparatus as claimed in claim 5, wherein at least one processor, individually and/or collectively, is configured to cause the electronic apparatus to:

acquire a vector value based on the three-axis coordinate values and the three-axis angular velocity values, and

identify the second movement distance information and the second movement direction information corresponding to a relative movement of the at least one of the user head or eyes based on the acquired vector value.

**7.** The apparatus as claimed in claim 5, wherein three-axis coordinate values corresponding to a first position and three-axis coordinate values corresponding to a second position each include x, y, and z coordinates in an XYZ space, and

three-axis angular velocity values include roll, pitch, and yaw values.

**8.** The apparatus as claimed in claim 1, wherein the 3D image includes the plurality of objects positioned in the 3D virtual space, and

at least one processor, individually and/or collectively, is configured to cause the electronic apparatus to:

identify a moving target object among the plurality of objects based on a current position of the at least one of the user head or eyes, or

identify the moving target object among the plurality of objects based on a user selection command.

**9.** The apparatus as claimed in claim 1, wherein the camera includes a plurality of cameras spaced apart from each other by a specified distance, and

at least one processor, individually and/or collectively, is configured to cause the electronic apparatus to:

identify disparity information based on first and second captured images acquired by the plurality of cameras, and

identify the movement information corresponding to the at least one of the user head or eyes in the 3D space where the user is positioned based on the disparity information.

**10.** The apparatus as claimed in claim 1, wherein the display includes a light field display (LFD).

**11.** A method of controlling an electronic apparatus, the method comprising:

displaying a three-dimensional (3D) image including an object positioned in a 3D virtual space;

identifying movement information corresponding to at least one of a user head or eyes in a 3D space where a user is positioned based on a captured image acquired by a camera;

identifying position movement information corresponding to the 3D virtual space based on the movement information; and

displaying the object by changing the display position and depth of the object within the 3D virtual space included in the 3D image based on the position movement information.

**12.** The method as claimed in claim 11, wherein the displaying of the object by changing the display position and depth of the object includes:

identifying first movement distance information and first movement direction information corresponding to the position movement information, and

displaying the object by changing the display position and depth of the object in the 3D virtual space based on the first movement distance information and the first movement direction information.

**13.** The method as claimed in claim 12, wherein in the identifying of the position movement information corresponding to the 3D virtual space,

second movement distance information corresponding to a difference between a first position and a second position is identified and second movement direction information from the first position to the second position is identified based on a position of the at least one of the user head or eyes in the captured image acquired by the camera being changed from the first position to the second position, and

in the displaying of the object by changing the display position and depth of the object,

the first movement distance information and the first movement direction information are identified based on the second movement distance information and the second movement direction information.

**14.** The method as claimed in claim 13, wherein the displaying of the object by changing the display position and depth of the object further includes identifying the first movement distance information and the first movement direction information by scaling the second movement distance information and the second movement direction information to correspond to the 3D virtual space.

**15.** A non-transitory computer-readable medium which stores a computer instruction for causing an electronic apparatus to perform an operation when executed by at least one processor, comprising processing circuitry, individually and/or collectively, of the electronic apparatus, wherein the operation includes:

displaying a three-dimensional (3D) image including an object positioned in a 3D virtual space,

identifying movement information corresponding to at least one of a user head or eyes in a 3D space where a user is positioned based on a captured image acquired by a camera,

identifying position movement information corresponding to the 3D virtual space based on the movement information, and

displaying the object by changing the display position and depth of the object within the 3D virtual space included in the 3D image based on the position movement information.

# FIG. 1

# FIG. 2A

100

110

140

120

| DISPLAY | ← → | AT LEAST ONE PROCESSOR | ← → | MEMORY |

CAMERA ~130

# FIG. 2B

100'

# FIG. 3

# FIG. 4

```
                    ┌─────────────┐
                    │    START    │
                    └──────┬──────┘
                           │
                           ▼
        ┌─────────────────────────────────────┐
        │  DISPLAY 3D IMAGE INCLUDING OBJECT   │ ～S410
        │     POSITIONED IN 3D VIRTUAL SPACE   │
        └──────────────────┬──────────────────┘
                           │
                           ▼
        ┌─────────────────────────────────────┐
        │ IDENTIFY MOVEMENT INFORMATION        │
        │ CORRESPONDING TO AT LEAST ONE OF     │
        │ USER HEAD OR EYES IN 3D SPACE WHERE  │ ～S420
        │ USER IS POSITIONED BASED ON          │
        │ CAPTURED IMAGE                       │
        └──────────────────┬──────────────────┘
                           │
                           ▼
        ┌─────────────────────────────────────┐
        │ IDENTIFY POSITION MOVEMENT           │
        │ INFORMATION CORRESPONDING TO 3D      │ ～S430
        │ VIRTUAL SPACE BASED ON MOVEMENT      │
        │ INFORMATION                          │
        └──────────────────┬──────────────────┘
                           │
                           ▼
        ┌─────────────────────────────────────┐
        │ DISPLAY OBJECT BY CHANGING DISPLAY   │
        │ POSITION AND DEPTH OF OBJECT WITHIN  │
        │ 3D VIRTUAL SPACE INCLUDED IN 3D      │ ～S440
        │ IMAGE BASED ON POSITION MOVEMENT     │
        │ INFORMATION                          │
        └──────────────────┬──────────────────┘
                           │
                           ▼
                    ┌─────────────┐
                    │     END     │
                    └─────────────┘
```

# FIG. 5

# FIG. 6

# FIG. 7

START

DISPLAY 3D IMAGE INCLUDING OBJECT POSITIONED IN 3D VIRTUAL SPACE ~S710

IS POSITION OF AT LEAST ONE OF USER HEAD OR EYES CHANGED FROM FIRST POSITION TO SECOND POSITION IN CAPTURED IMAGE ~S720

N

Y

IDENTIFY SECOND MOVEMENT DISTANCE INFORMATION CORRESPONDING TO DIFFERENCE BETWEEN FIRST POSITION AND SECOND POSITION AND MOVEMENT DIRECTION INFORMATION FROM FIRST POSITION TO SECOND POSITION ~S730

SCALE SECOND MOVEMENT DISTANCE INFORMATION AND MOVEMENT DIRECTION INFORMATION TO CORRESPOND TO 3D VIRTUAL SPACE ~S740

DISPLAY OBJECT BY CHANGING DISPLAY POSITION OF OBJECT FROM FIRST DISPLAY POSITION TO SECOND DISPLAY POSITION IN 3D VIRTUAL SPACE, AND CHANGING DEPTH OF OBJECT FROM FIRST DEPTH TO SECOND DEPTH, BASED ON SCALED FIRST MOVEMENT DISTANCE INFORMATION AND FIRST MOVEMENT DIRECTION INFORMATION ~S750

END

# FIG. 8

# FIG. 9

# FIG. 10

## INTERNATIONAL SEARCH REPORT

| International application No. |
| --- |
| **PCT/KR2024/019881** |

| | |
| --- | --- |
| **A. CLASSIFICATION OF SUBJECT MATTER** | |

**H04N 13/344**(2018.01)i; **H04N 13/383**(2018.01)i; **H04N 13/371**(2018.01)i; **H04N 13/128**(2018.01)i; **H04N 13/111**(2018.01)i; **H04N 13/178**(2018.01)i; **G06F 1/16**(2006.01)i; **G06F 3/01**(2006.01)i; **G02B 27/01**(2006.01)i; **G06T 7/50**(2017.01)i

According to International Patent Classification (IPC) or to both national classification and IPC

**B. FIELDS SEARCHED**

Minimum documentation searched (classification system followed by classification symbols)

H04N 13/344(2018.01); G02B 27/00(2006.01); G02B 27/02(2006.01); G06F 3/0346(2013.01); G06F 3/0481(2013.01); G06K 9/36(2006.01); H04N 13/30(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 디스플레이(display), 카메라(camera), 3차원(three dimensional), 가상 공간(virtual space), 오브젝트(object), 사용자(user), 머리(head), 눈(eye), 움직임(motion), 위치(position), 뎁스(depth)

**C. DOCUMENTS CONSIDERED TO BE RELEVANT**

| Category* | Citation of document, with indication, where appropriate, of the relevant passages | Relevant to claim No. |
| --- | --- | --- |
| Y | KR 10-2015-0037254 A (LG ELECTRONICS INC.) 08 April 2015 (2015-04-08) See paragraphs [0030] and [0046]; claims 1 and 4-5; and figure 2. | 1-3,5-6,8-13,15 |
| A | | 4,7,14 |
| Y | KR 10-2021-0100690 A (UNIVERSAL CITY STUDIOS LLC) 17 August 2021 (2021-08-17) See paragraph [0040]; claim 1; and figures 3-4 and 8. | 1-3,5-6,8-13,15 |
| Y | KR 10-2019-0130770 A (SAMSUNG ELECTRONICS CO., LTD.) 25 November 2019 (2019-11-25) See paragraph [0024]; claims 1-4 and 8-9; and figure 2. | 5-6 |
| Y | KR 10-2070800 B1 (SAMSUNG ELECTRONICS CO., LTD.) 29 January 2020 (2020-01-29) See claim 1. | 10 |
| A | KR 10-2023-0098927 A (MAGIC LEAP, INC.) 04 July 2023 (2023-07-04) See paragraphs [0004]-[0006]; and claims 1-20. | 1-15 |

☐ Further documents are listed in the continuation of Box C.   ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **13 March 2025** | **13 March 2025** |

| Name and mailing address of the ISA/KR | Authorized officer |
| --- | --- |
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

| | International application No. |
|---|---|
| | **PCT/KR2024/019881** |

| Patent document cited in search report | | | Publication date (day/month/year) | Patent family member(s) | | | Publication date (day/month/year) |
|---|---|---|---|---|---|---|---|
| KR | 10-2015-0037254 | A | 08 April 2015 | US | 2015-0091943 | A1 | 02 April 2015 |
| | | | | WO | 2015-046686 | A1 | 02 April 2015 |
| KR | 10-2021-0100690 | A | 17 August 2021 | CA | 3121182 | A1 | 18 June 2020 |
| | | | | CN | 113196136 | A | 30 July 2021 |
| | | | | CN | 113196136 | B | 07 May 2024 |
| | | | | EP | 3894935 | A1 | 20 October 2021 |
| | | | | JP | 2022-511571 | A | 31 January 2022 |
| | | | | JP | 2024-105595 | A | 06 August 2024 |
| | | | | JP | 7491926 | B2 | 28 May 2024 |
| | | | | SG | 11202105492 | A | 29 June 2021 |
| | | | | US | 10778953 | B2 | 15 September 2020 |
| | | | | US | 11122249 | B2 | 14 September 2021 |
| | | | | US | 11736674 | B2 | 22 August 2023 |
| | | | | US | 2020-0186775 | A1 | 11 June 2020 |
| | | | | US | 2020-0413023 | A1 | 31 December 2020 |
| | | | | US | 2021-0400250 | A1 | 23 December 2021 |
| | | | | WO | 2020-123357 | A1 | 18 June 2020 |
| KR | 10-2019-0130770 | A | 25 November 2019 | EP | 3570144 | A1 | 20 November 2019 |
| | | | | EP | 3570144 | B1 | 22 February 2023 |
| | | | | US | 2019-0354259 | A1 | 21 November 2019 |
| KR | 10-2070800 | B1 | 29 January 2020 | None | | | |
| KR | 10-2023-0098927 | A | 04 July 2023 | AU | 2017-244109 | A1 | 11 October 2018 |
| | | | | CN | 114995594 | A | 02 September 2022 |
| | | | | EP | 3436863 | A1 | 06 February 2019 |
| | | | | IL | 289973 | A | 01 March 2022 |
| | | | | JP | 2023-052243 | A | 11 April 2023 |
| | | | | JP | 2024-167346 | A | 03 December 2024 |
| | | | | JP | 6904973 | B2 | 21 July 2021 |
| | | | | KR | 10-2018-0124136 | A | 20 November 2018 |
| | | | | KR | 10-2438052 | B1 | 29 August 2022 |
| | | | | KR | 10-2551198 | B1 | 03 July 2023 |
| | | | | NZ | 746640 | A | 27 March 2020 |
| | | | | US | 2017-0287225 | A1 | 05 October 2017 |
| | | | | US | 2018-0365901 | A1 | 20 December 2018 |
| | | | | US | 2022-0020218 | A1 | 20 January 2022 |
| | | | | US | 2023-0245406 | A1 | 03 August 2023 |
| | | | | US | 2024-0338912 | A1 | 10 October 2024 |
| | | | | WO | 2017-172982 | A1 | 05 October 2017 |

Form PCT/ISA/210 (patent family annex) (July 2022)